(19)

Europäisches
Patentamt
European
Patent Office
Office européen
des brevets

(11) **EP 1 898 359 A2**

(12) **EUROPEAN PATENT APPLICATION**

(43) Date of publication:
**12.03.2008 Bulletin 2008/11**

(51) Int Cl.:
*G06T 15/70* (2006.01)

(21) Application number: **07017191.3**

(22) Date of filing: **03.09.2007**

(84) Designated Contracting States:
**AT BE BG CH CY CZ DE DK EE ES FI FR GB GR
HU IE IS IT LI LT LU LV MC MT NL PL PT RO SE
SI SK TR**
Designated Extension States:
**AL BA HR MK YU**

(30) Priority: **05.09.2006 US 469921**

(71) Applicant: **Pontificia Universidad Catolica de Chile
Vicuña Mackenna 4860
Macul
Santiago (CL)**

(72) Inventors:
• **Irarrazaval, Pablo
Santiago (CL)**
• **Plett, Johannes
Santiago (CL)**

(74) Representative: **Carvajal y Urquijo, Isabel et al
Clarke, Modet & Co.,
C/ Goya No. 11
28001 Madrid (ES)**

(54) **Enhancement of visual perception through dynamic cues**

(57)    A method for transforming a static image into a dynamic image (movie) is provided to aid in the detection and to identify pathologies and abnormalities in patients based on images. The system receives as input static images and generates as output dynamic images containing the dynamic cues. The dynamic cues are generated by the operation of a motion function and observation function on the static image. A sequence of image frames is created, such that when viewed the dynamic cues are discernable on the image.

FIG. 1

EP 1 898 359 A2

**Description**

FIELD OF THE INVENTION

The invention relates a system and method for reading images, and more particularly, to a system and method for adding dynamic cues into static images allowing for combinations of all visual sensitivities to be used in order to augment perception and hereby enable an observer to detect patterns or objects previously not noticeable

BACKGROUND OF THE INVENTION

Nowadays images are a vital tool in areas in which human observation is employed. Such areas can include medical image screening, industrial screening, military surveying, astronomical observations, etc. For example, in medical image screening the detection and correct interpretation of lesions are top priorities for a correct diagnosis, but regretfully this is not always easily accomplished.

Medical images often contain very small and hardly detectable objects or patterns, which can be of grave importance for diagnosis. Design of perceptual aids for detection of these kinds of objects is an ongoing research area. Most work focuses on static image processing, meaning the final outcome is an image or a map of possible locations of lesions. Typically, lesions can be detected by differences in color, intensity, structure or texture between the lesion and its surroundings.

The human vision system (HVS) is a very powerful tool for perception and image processing. Amongst its basic capabilities are figure segmentation, registration and processing of still images. It is also very well adapted for efficient pattern recognition. Brian A. Wandell, Foundations of Vision, Sinauer Associates Inc., Sunderland, Mass., May 1995; Bruno A. Olshausen and David J. Field, Sparse coding with an overcomplete basis set: A strategy employed by v1?, Vision Research, 37:3311-3325, 1997. This aspect of the HVS is what image analysis is largely based upon, i.e. the ability of a person to distinguish between normal and abnormal patterns.

There are variety of cases in which for the HVS it is very complicated, if not impossible, to detect certain patterns or objects. This is often the case in medical images where it is necessary to spot objects in front of a background of a color or texture almost identical to the objects'. Classical examples of this kind of images are mammograms with microcalcifications. Microcalcifications are small deposits of calcium in breast tissue, that may indicate breast cancer if present in malignant clusters. Unfortunately mammograms tend to be of low contrast and microcalcifications of very small size, making it rather difficult for the examining radiologist to detect them and make a correct diagnosis. Edward A. Sickles, Breast calcifications: Mammographic evaluation, Radiology, 160(2):289-293, August 1986.

Improvement of correct detection rate in breast cancer is of grave importance. Each year in the United States more than 212,000 new cases of breast cancer are diagnosed. In the years from 1992 to 2002, the incidence rate has gone up 0.4% annually. Currently breast cancer is the second most common cause of cancer deaths in women, surpassed only by lung cancer. In the United States about 1 in every 33 women dies of breast cancer totaling more than 40,000 deaths per year. L. A. G. Ries, M. P. Eisner, C. L. Kosary, B. F. Hankey, B. A. Miller, L. Clegg, A. Mariotto, E. J. Feuer, and B. K. Edwards, editors, SEER Cancer Statistics Review 1975-2002, Bethesda, MD, November 2004, National Cancer Institute.

If detected at an early stage, breast cancer is treatable and thus mortality rate is greatly reduced. This makes early detection of microcalcifications and tumors an extremely important task in oncology. The earlier they are detected the better is the chance of treatment and survival. The work of Ries et al. shows that, in spite of growing breast cancer incidence, the breast cancer mortality rate has declined. In fact, this rate has gone down 2.4% annually from 1992 to 2002, which is mostly due to earlier detection of malignant masses and better treatment. If detection methods keep on improving, the mortality rate of cancer will continue to drop. The sheer amount of cases of cancer makes it possible for even a slight improvement in detection algorithms to save hundreds or thousands of lives each year.

An objective of the present invention is to aid in the detection and to identify objects and features in images. The method is adapted to the biological HVS, which is very well suited for perception of moving objects, explaining the existence of motion sensitivity and flicker sensitivity apart from traditional amplitude sensitivity. Thus, the introduction of artificial movement and/or flicker (dynamic cues) into static images allowing for combinations of all visual sensitivities to be used in order to augment perception and hereby enable the observer to detect patterns or objects previously not noticeable.

A further objective of the present invention is to aid radiologists and general medical doctors in perception of medical images. The introduction of artificial movement and/or flicker (dynamic cues) into static medical images allowing for combinations of all visual sensitivities to be used in order to augment perception and hereby enable the radiologist to detect patterns or objects previously not noticeable.

SUMMARY OF THE INVENTION

The present invention provides a method for transforming a static image into a movie to aid in the detection and to identify objects and features in images. In this movie the observer sees motion or flicker which depends on the features of the static image. The system receives as input static images and generates as output a movie containing the dynamic cues. Two kinds of dynamic cues are utilized: spatial movement (the pixel is moved around in some fashion) and temporal variation of the intensity at a fixed location (there is no change in position, only in its intensity). The definition of the motion is described by a "motion function," which express mathematically the kind of movement that will affect the pixels. The characteristics of the motion (how much will it move, or at what frequency) depend on the data through what we call the "observation function".

The method can be well suited for radiology because of its technical merits but also because it does not replace the human observers, who have to take responsibility for the diagnosis. This method can also be useful in other areas in which a human observer is employed. Some of these could be: industrial screening, military surveying, astronomical observations, etc.

BRIEF DESCRIPTION OF THE DRAWINGS

A more complete understanding of the present invention, and the attendant advantages and features thereof, will be more readily understood by reference to the following detailed description when considered in conjunction with the accompanying drawings wherein:

FIG. 1 depicts a schematic representation of laterally oscillating movement function;

FIG. 2 depicts a schematic representation of pulsating movement function;

FIG. 3 depicts a schematic representation of temporal movement function with pulsating intensity;

FIG. 4 depicts a graphical representation of a phase shift of two pixels with slightly different intensities;

FIG. 5 depicts a light intensity phase shift of two pixels with slightly different intensities;

FIG. 6 is an image of an exemplary mammogram;

FIGS. 7A-7I depicts a sequence of frames of the mammogram of FIG. 6 generated using the method of the present invention;

FIG. 8 is a zoomed in image of the mammogram of FIG. 6;

FIG. 9 is a zoomed in image of the generated frame of FIG. 7F;

FIG. 10 depicts a pooled mean ROC curve for non-radiologists;

FIG. 11 depicts a pooled mean ROC curve for radiologists; and

FIG. 12 depicts a schematic diagram of a computer system for implementing the method of the present invention.

DETAILED DESCRIPTION OF THE INVENTION

The present invention provides a method for transforming a static image into a movie to aid in the detection and to identify objects and features in images. In this movie the observer sees motion or flicker which depends on the features of the static image. The system receives as input static images and generates as output a movie containing the dynamic cues.

Two kinds of dynamic cues are utilized: spatial movement (the pixel is moved around in some fashion) and temporal variation of the intensity at a fixed location (there is no change in position, only in its intensity). Spatial motion can be understood as the name implies, as objects moving in space throughout the frames. In the present invention, the objects to be moved will be the pixels (picture *el*ements). The concept of temporal motion refers to a pixel not moving in space but changing its intensity in time.

The definition of the motion is described by a "motion function," which expresses mathematically the kind of movement that will affect the pixels. The characteristics of the motion (how much will it move, or at what frequency) depend on the data through what we call the "observation function".

An exemplary method of introducing this artificial movement to images is based upon two functions: the motion function $f_{mov}$ and the observation function $f_{obs}$. The motion function specifies the type of movement while the observation function sets the parameters for this motion.

<u>Motion Function</u>

From a single gray scale still image $I_0$ of $m \times n$ pixels it is possible to generate a sequence of $k = 0K\ p$ images of $m \times n$ pixels, in which the intensity $I$ of the pixel corresponding to the coordinates $(i, j)$ of the $k^{th}$ image can be expressed as:

$$I_k(i, j) = f_{mov}(f_{obs}(I_0(i, j)), k) \qquad (1)$$

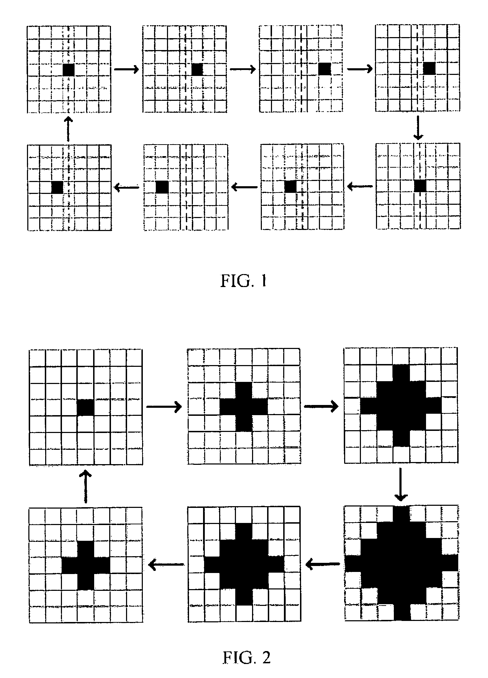

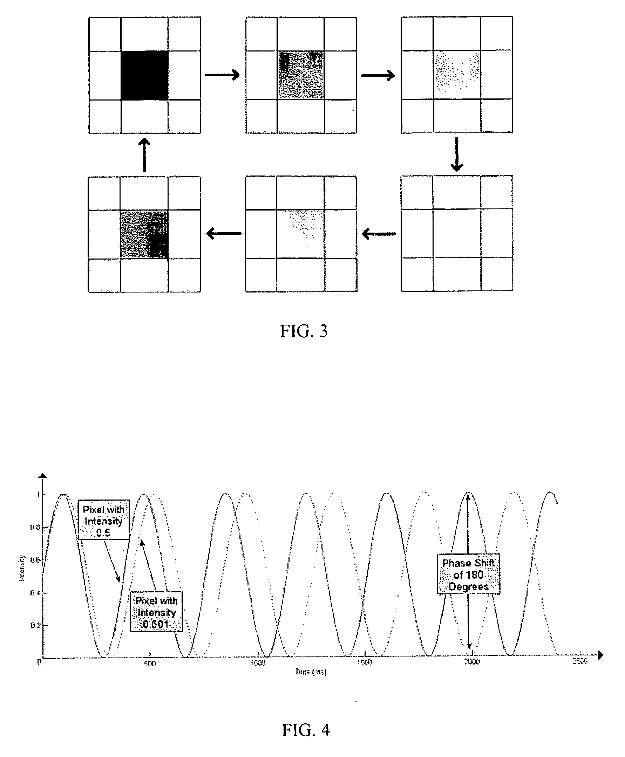

$I_k(i, j)$ is a discrete sequence *of m × n* pixels dependent on the motion function $f_{mov}()$ which defines the movement of the pixels through the sequence of frames. This movement can be spatial or temporal, meaning that a pixel can vary its spatial location or its intensity in time. FIG. 1 illustrates a possible implementation of spatial movement as a sideway oscillation of every pixel at constant amplitude and a frequency that depends on each pixels original intensity. In this way a light pixel may oscillate from one side to the other faster than a darker pixel.

Another way of introducing spatial motion is a pulsating motion as shown in FIG. 2. As with lateral oscillation, the frequency of pulsations depends on the original intensity of each pixel.

For temporal movement an example could be a sinusoidal variation of intensity for every pixel where frequency of variation depends on the pixels original intensity. Again, an originally lighter intensity pixel would change faster than an originally darker one. An example is shown in FIG. 3 and the equation for a possible implementation is given in equation 2.

$$I_k(i, j) = f_{DC}(I_0(i, j)) + a \cdot \cos(2\pi f_0 k \cdot f_{obs}(I_0(i, j)) + \phi) \qquad (2)$$

In equation 2, $I_k(i, j)$ represents the intensity of the pixel of coordinates $(i, j)$ in the $k^{th}$ frame, $f_{DC}()$ is an offset for every pixel, a is the amplitude of the sine wave, $f_0$ is its fundamental frequency, $f_{obs}()$ is the observation function and $\phi$ the phase shift. For each of these implementations the rate of change of position (oscillating movement), size (pulsating movement) or gray level (pulsating intensity) can be varied according to different functions. Equation 2, for instance, implements a sine wave. The motion function can be any periodic or oscillatory function, and can include for example:

$$f_{mov} = \begin{cases} \text{Sine wave} \\ \text{Triangular wave} \\ \text{Rectangular wave} \\ \text{Sawtooth wave} \\ \Lambda \end{cases}$$

Observation Function

The observation function $f_{obs}$ defines what exactly the movement is based upon. Whereas the motion function defines what is to be done with each pixel, the observation function defines the pixel itself, i.e. the original intensity of the pixel used to create the sequence. If $f_{obs}(I_0) = I_0$, meaning $f_{obs}$ is the identity, we have the particular case that throughout the sequence the movement depends on the pixel intensities of the original image. When

$$f_{obs}(I_0) = \frac{d}{dx} I_0 \text{, the movement varies according to the first derivative of the initial image.}$$

Other, more complex implementations are also possible as shown next:

$$f_{obs}(I_0) = \begin{cases} I_0 \\ \dfrac{d}{dx} I_0 \\ \text{Canny Filter of } I_0 \\ \text{Unsharp Mask of } I_0 \\ \text{Wavelet Transform of } I_0 \\ \Lambda \end{cases}$$

Results

In the case of a sinusoidally changing pulsating intensity motion function and the identity matrix as observation function, the equation for such a sequence is $I_k(i, j) = \alpha I_0(i, j) + (1-\alpha)cos(2\pi f_0 k \cdot I_0(i, j))$ for $k = 0K\ p$, where the intensities of the pixels range from 0 (black) to 1 (white). The first frame is $\alpha$ times the original image since $k = 0$. The frames for $k = 1K\ p$ yield a sequence of matrices in which each pixel sinusoidally changes its intensity proportionally to its original intensity.

By seeing the whole array of images as a motion picture sequence, it is possible to detect objects by the phase shift produced between two pixels with different original intensities. Even if these two adjacent pixels have relatively small differences in intensity in the original still image, in time the phase shift will become clearly visible in the movie. An example of this is shown in FIG. 4, where using this proportional sinusoidal approach two pixels with a minimal intensity difference show a phase shift of 180° in a very short time.

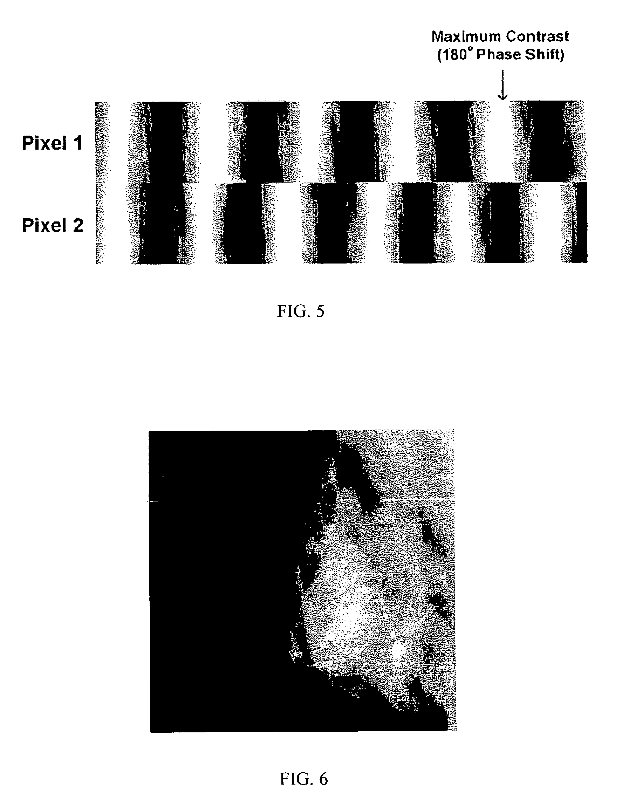

FIG. 5 shows the same two pixels sinusoidally changing intensities from white to black with frequencies proportional to their original intensity. Both pixels start out with a slightly different gray intensity, which is not perceptually visible. After a short while the phase shift becomes clear as one pixel exhibits a faster cycle than the other.

In some aspects this is similar to dynamically changing image contrast, which by itself is a much used tool in medical imaging. Here the viewer is presented with a sequence of images with sinusoidally changing contrast.

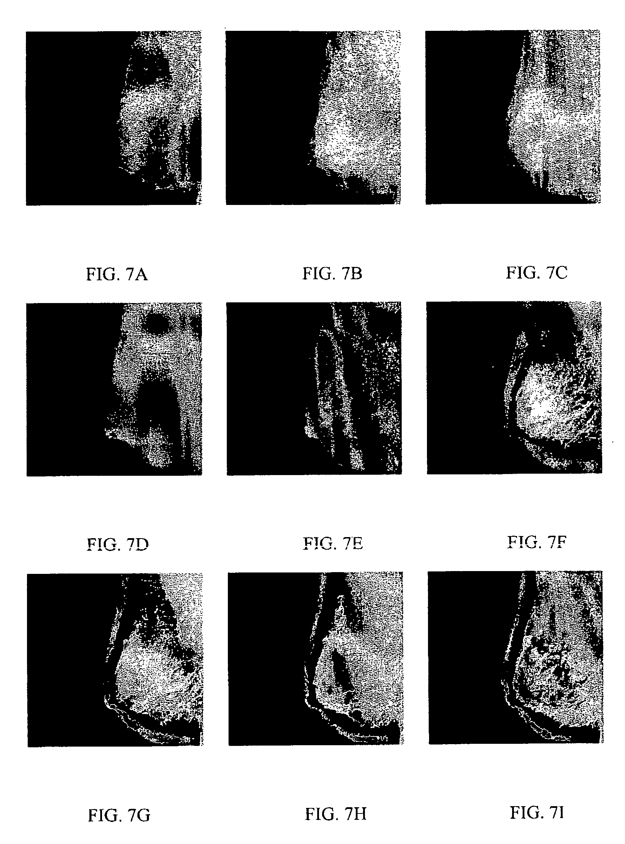

To illustrate this effect on real images a sequence of medical images is provided. The sequence of medical images is provided for illustrative purposes only, and is not intend to limit the scope or purview of the invention. The sequence of real medical images is comprised of 30 frames generated from a static digital mammogram shown in FIG. 6 using a sinusoidally pulsating intensity motion function and an Unsharp Mask observation function. FIG. 7A-7I shows samples of this sequence.

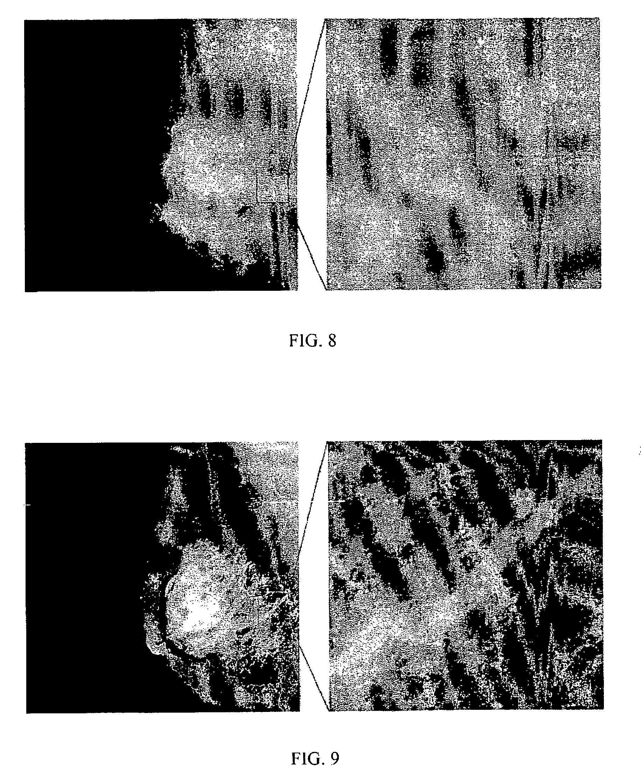

The mammogram presented here contains a malignant cluster of microcalcifications in the central right section barely visible in the original image, shown in FIG. 7A. Nevertheless, in some of the subsequent frames it becomes fairly visible. In this particular example this holds true especially for frame 15, as shown in FIG. 7F. For comparison purposes, the original image and frame 15 are shown in FIGS. 8 and 9 respectively.

Evidently, the malignant cluster is far more visible in FIG. 9, which by itself is quite useful in diagnosis. But additionally to the enhanced visibility, the fact that the cluster cycles rapidly from hardly visible to very visible gives it a blinking appearance. It is submitted that something blinking is very likely to attract attention even if not directly looked at. The explanation of this lies in the use of motion and flicker sensitivity. Whereas amplitude sensitivity and foveal vision are used for concentrating on one specific point, motion and flicker sensitivity paired with peripheral vision give a broader view and are used primarily to detect moving or blinking objects. Once detected, foveal vision can be concentrated on these objects for detailed analysis. This approach is the basic idea behind Dynamic Cues.

Statistical Analysis

In order to compare diagnostics with and without Dynamic Cues, a test was designed in which the observer is once presented with a set of static mammograms and once with the same set, but aided by Dynamic Cues. In both cases, the observer has to give a diagnosis of presence of microcalcifications, ranging from *Category 1: Definitely not present* to *Category 5*: *Definitely present,* and their possible locations in each mammogram.

The results of these tests were analyzed using a Receiver Operating Characteristic (ROC) curve technique. Charles E. Metz et al., Statistical comparison of two roc-curve estimates obtained from partially paired datasets, Medical Decision Making, 18(1):110-121, January-March 1998. In this method, the True Positive Fraction (TPF) is plotted against the False Positive Fraction (FPF) sweeping through all categories of diagnosis. A completely random diagnosis equivalent to tossing a coin would be a diagonal line connecting the points (0, 0) and (1, 1) in the ROC plot, yielding an area under the curve (AUC) of 0.5. A perfect diagnosis would have an associated ROC curve consistent of a vertical line connecting the points (0, 0) and (0, 1) and a horizontal line continuing from (0, 1) on to (1, 1). The area underneath this curve equals 1. Every other test in between would have an AUC somewhere between 0.5 and 1. The higher the AUC, the better is the test.

A set of $n_y$ = 124 mammograms digitized at 200 micron pixel edge with resolutions between 640 × 640 and 970 × 970 pixels per image and a gray-level resolution of 8 bits per pixel taken from the Mammographic Image Analysis Society (MIAS) mammographic database was prepared. John Suckling et al., The mammographic image analysis society digital mammogram database, In Exerpta Medica, number 1069 in International Congress, pages 375-378, 1994. There are a total of 21 cases with microcalcification clusters and 103 normal cases. Since various degrees of visibility of microcalcifications are included in the set, this database is representative of clinical cases.

The test was performed with five radiologists and five non-radiologists. The resulting bi-normally fitted ROC curves and the associated AUC scores were computed using the ROCKIT program proposed by Metz *et al.* In order to compute a representative mean, two different averaging techniques were used on both radiologist and non-radiologist data sets. The first one is the simple average mean, where the bi-normally fitted vertical intercept and slope values are averaged and a curve is calculated from the resulting values. This method tends to overestimate the results, but still lies within the extremes of the individual results.

The second and perhaps more representative technique is the pooled mean. This mean is obtained for each group - radiologists or non-radiologists - by joining all the diagnoses of the 5 participants of the group and computing the resulting ROC curve as if it were one person analyzing 5 × $n_y$ = 620 cases. Vit Drga, The Theory of Group Operating Characteristic Analysis in Discrimination Tasks, PhD thesis, Victoria University of Wellington, New Zealand, 1999. This method usually tends to underestimate the results, but since it underestimates both test categories it is still well suited for comparison purposes.

The resulting AUC scores and the curve parameters of the tests for radiologists and nonradiologists along with their mean values are listed in Tables 1 and 2.

TABLE 1: Non-Radiologist ROC curve properties

| Observer | Technique | Vertical Intercept | Slope | Area Under Curve |
|---|---|---|---|---|
| | | a | b | AUC |
| 1 | Static Images | 1.036 | 0.420 | 0.830 |
| | Dynamic Cues | 3.679 | 1.551 | 0.977 |
| | | | | |
| 2 | Static Images | 2.643 | 2.258 | 0.858 |
| | Dynamic Cues | 1.514 | 0.536 | 0.909 |
| | | | | |
| 3 | Static Images | 1.434 | 0.628 | 0.888 |
| | Dynamic Cues | 3.341 | 1.183 | 0.985 |
| | | | | |
| 4 | Static Images | 1.364 | 0.534 | 0.886 |
| | Dynamic Cues | 1.819 | 0.318 | 0.959 |
| | | | | |
| 5 | Static Images | 1.494 | 0.716 | 0.888 |
| | Dynamic Cues | 1.794 | 0.800 | 0.919 |
| Average Mean | Static Images | 1.594 | 0.911 | 0.881 |
| | Dynamic Cues | 2.429 | 0.878 | 0.966 |
| Pooled Mean | Static Images | 1.064 | 0.723 | 0.806 |
| | Dynamic Cues | 1.478 | 0.469 | 0.910 |

As can be seen, diagnosis aided by Dynamic Cues significantly raises the AUC for both groups. Considering a perfect diagnosis having an area of 1 and a completely random diagnosis an area of 0.5, we can conclude that for non-radiologists the AUC is raised by (0.91-0.806)/(1-0.5) = 20.8%, while for radiologists by (0.942-0.9)/(1-0.5) = 8.4%.

Commonly, individual ROC scores for screening microcalcifications in mammography lie between 0.75 and 0.95. Xiao-Hua Zhou, Donna K. McClish, and Nancy A. Obuchowski. Statistical Methods in Diagnostic Medicine, Wiley Series in Probability and Statistics, Wiley, first edition, July 2002. The scores obtained in our tests are well within these typical ranges. Moreover, they indicate a very good result for classification using Dynamic Cues in comparison to those general scores.

TABLE 2: Radiologist ROC curve properties

| Observer | Technique | Vertical Intercept | Slope | Area Under Curve |
|---|---|---|---|---|
| | | a | b | AUC |
| 6 | Static Images | 1.534 | 0.662 | 0.899 |
| | Dynamic Cues | 1.428 | 0.147 | 0.921 |
| | | | | |
| 7 | Static Images | 2.361 | 0.764 | 0.970 |
| | Dynamic Cues | 2.457 | 0.908 | 0.970 |
| | | | | |
| 8 | Static Images | 1.549 | 0.543 | 0.913 |
| | Dynamic Cues | 1.610 | 0.451 | 0.929 |
| | | | | |
| 9 | Static Images | 2.244 | 0.742 | 0.964 |
| | Dynamic Cues | 2.239 | 0.717 | 0.966 |
| | | | | |
| 10 | Static Images | 1.106 | 0.181 | 0.862 |
| | Dynamic Cues | 1.760 | 0.603 | 0.934 |
| Average Mean | Static Images | 1.758 | 0.578 | 0.936 |
| | Dynamic Cues | 1.899 | 0.565 | 0.951 |
| Pooled Mean | Static Images | 1.419 | 0.479 | 0.900 |
| | Dynamic Cues | 1.663 | 0.338 | 0.942 |

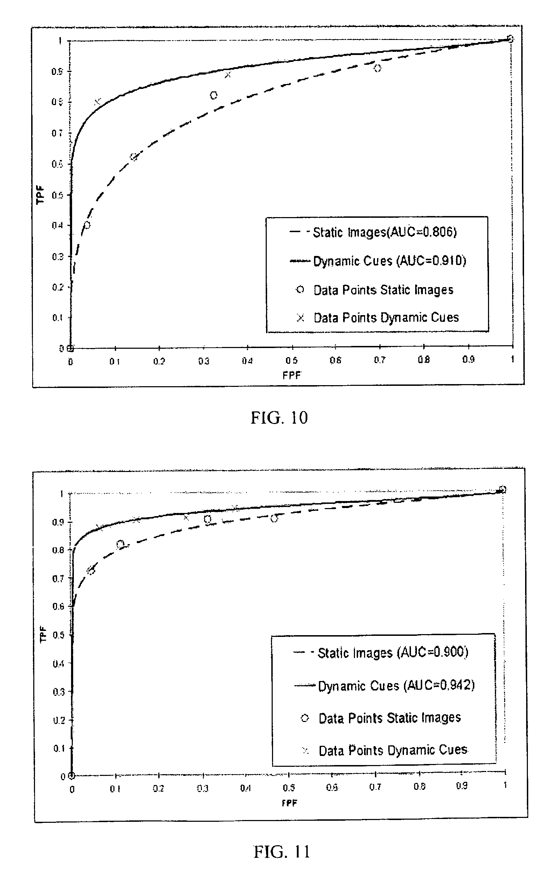

The mean ROC curves for both groups are shown in FIGS. 10 and 11.

Tables 1 and 2 show significant improvement in diagnosis for both experts and nonexperts. The 8.4% improvement for radiologist medical doctors indicates vast possibilities of improvement of diagnosis if perfected and clinically implemented as a standard visualization tool for radiologists. It also has to be considered that in these tests, these medical doctors had ample experience in traditional static mammography analysis, but had never before seen dynamic cues in this kind of application. All the training provided before the test was a training set consisting of four images with and four images without microcalcifications viewed using dynamic cues. It is a clear indication of the potential of dynamic cues that results turned out that positive in spite of short training.

The motion and observation function, i.e. temporal pulsating intensity motion function and Unsharp Mask observation function are exemplary functions. Other implemented motion functions can include laterally oscillating functions as shown in FIG. 1 and spatially pulsating functions as shown in FIG. 2. Other observation functions can include the identity matrix and wavelet based transformations. The wavelet transform based methods tested here were adapted versions of the algorithms proposed by Wang *et al.* Ted C. Wang and Nicolaos B. Karayiannis. Detection of microcalcifications in digital mammograms using wavelets. IEEE Transactions on Medical Imaging, 17(4):498-509, August 1988.

A strength of the dynamic cues method lies in its use of the highly evolved human brain functions already present, but not used in the context of image analysis, without discarding traditional static two-dimensional brain functions. In effect, it uses brain functions every mammal is highly trained for movement.

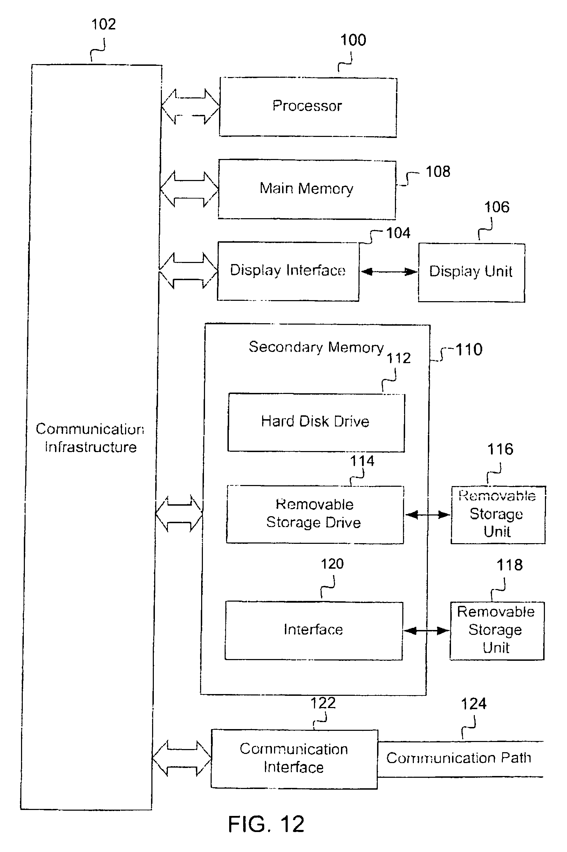

FIG.12 is a block diagram of a computer system useful for implementing the methods of the present invention. The computer system includes one or more processors, such as processor 100. The processor 100 is connected to a communication infrastructure 102 (e.g., a communications bus, cross-over bar, or network). Various software embodiments are described in terms of this exemplary computer system. After reading this description, it will become apparent to a person of ordinary skill in the relevant art(s) how to implement the invention using other computer systems and/or computer architectures.

The computer system can include a display interface 104 that forwards graphics, text, and other data from the communication infrastructure 102 (or from a frame buffer not shown) for display on the display unit 106. The computer system also includes a main memory 108, preferably random access memory (RAM), and may also include a secondary memory 110. The secondary memory 110 may include, for example, a hard disk drive 112 and/or a removable storage drive 114, representing a floppy disk drive, a magnetic tape drive, an optical disk drive, etc. The removable storage drive 114 reads from and/or writes to a removable storage unit 116 in a manner well known to those having ordinary skill in the art. Removable storage unit 116, represents a floppy disk, magnetic tape, optical disk, etc. which is read by and written to by removable storage drive 114. As will be appreciated, the removable storage unit 116 includes a computer usable storage medium having stored therein computer software and/or data.

In alternative embodiments, the secondary memory 110 may include other similar means for allowing computer programs or other instructions to be loaded into the computer system. Such means may include, for example, a removable storage unit 118 and an interface 120. Examples of such may include a program cartridge and cartridge interface (such as that found in video game devices), a removable memory chip (such as an EPROM, or PROM) and associated socket, and other removable storage units 118 and interfaces 120 which allow software and data to be transferred from the removable storage unit 118 to the computer system.

The computer system may also include a communications interface 122. Communications interface 122 allows software and data to be transferred between the computer system and external devices. Examples of communications interface 122 may include a modem, a network interface (such as an Ethernet card), a communications port, a PCMCIA slot and card, etc. Software and data transferred via communications interface 122 are in the form of signals which may be, for example, electronic, electromagnetic, optical, or other signals capable of being received by communications interface 122. These signals are provided to communications interface 122 via a communications path (i.e., channel) 124. This channel 124 carries signals and may be implemented using wire or cable, fiber optics, a phone line, a cellular phone link, an RF link, and/or other communications channels.

In this document, the terms "computer program medium," "computer usable medium," and "computer readable medium" are used to generally refer to media such as main memory 108 and secondary memory 110, removable storage drive 114, a hard disk installed in hard disk drive 112, and signals. These computer program products are means for providing software to the computer system. The computer readable medium allows the computer system to read data, instructions, messages or message packets, and other computer readable information from the computer readable medium. The computer readable medium, for example, may include nonvolatile memory, such as Floppy, ROM, Flash memory, Disk drive memory, CD-ROM, and other permanent storage. It is useful, for example, for transporting information, such as data and computer instructions, between computer systems. Furthermore, the computer readable medium may comprise computer readable information in a transitory state medium such as a network link and/or a network interface, including a wired network or a wireless network, that allow a computer to read such computer readable information.

Computer programs (also called computer control logic) are stored in main memory 108 and/or secondary memory 110. Computer programs may also be received via communications interface 122. Such computer programs, when executed, enable the computer system to perform the features of the present invention as discussed herein. In particular, the computer programs, when executed, enable the processor 100 to perform the features of the computer system. Accordingly, such computer programs represent controllers of the computer system.

All references cited herein are expressly incorporated by reference in their entirety.

It will be appreciated by persons skilled in the art that the present invention is not limited to what has been particularly shown and described herein above. In addition, unless mention was made above to the contrary, it should be noted that all of the accompanying drawings are not to scale. A variety of modifications and variations are possible in light of the above teachings without departing from the scope and spirit of the invention.

## Claims

1. A method for reading a medical image comprising:

   providing a static medical image;
   adding a dynamic cue to the static medical image to create a dynamic medical image; and
   viewing the dynamic cue in the dynamic medical image.

2. The method as set forth in claim 1 wherein adding the dynamic cue to the static image comprises adding spatial movement to at least one pixel of the static image.

3. The method as set forth in claim 1 wherein adding the dynamic cue to the static image comprises adding temporal movement to at least one pixel of the static image over a period of time.

4. The method as set forth in claim 1 wherein adding the dynamic cue to the static image comprises:

   defining a motion function; and
   defining an observation function.

5. The method as set forth in claim 4 wherein the motion function defines the movement of at least one pixel in the static image.

6. The method as set forth in claim 5 wherein the motion function is a sine wave function, a triangular wave function, a rectangular wave function, or a sawtooth wave function.

7. The method as set forth in claim 5 wherein the observation function defines the at least one pixel the motion function will act on.

8. The method as set forth in claim 7 wherein the observation function defines an original intensity of the at least one pixel.

9. The method as set forth in claim 8 wherein the observation function is a function of the original intensity of the at least one pixel, a derivative of the original intensity of the at least one pixel, a canny filter of the original intensity of the at least one pixel, a unsharp mask of the original intensity of the at least one pixel, or a wavelet transform of the original intensity of the at least one pixel.

10. The method as set forth in claim 1 wherein the dynamic cue is used to identify pathologies and abnormalities in the medical image.

11. A method for adding a dynamic cue to a static image comprising:

    providing a static image;
    defining a motion function, wherein the motion function defines the movement of at least one pixel in the static image;
    defining a observation function, wherein the observation function defines the at least one pixel the motion function will act on; and
    applying the motion function and the observation function to the static image to create a dynamic image.

12. The method as set forth in claim 11 wherein the motion function is a a periodic function or a oscillatory function.

13. The method as set forth in claim 11 wherein the observation function defines an original intensity of the at least one pixel.

14. The method as set forth in claim 13 wherein the observation function is a function of the original intensity of the at least one pixel, a derivative of the original intensity of the at least one pixel, a canny filter of the original intensity of the at least one pixel, a unsharp mask of the original intensity of the at least one pixel, or a wavelet transform of the original intensity of the at least one pixel.

15. The method as set forth in claim 11 wherein the motion function adds spatial movement to at least one pixel of the static image.

16. The method as set forth in claim 11 wherein the motion function adds temporal movement to at least one pixel of the static image over a period of time.

17. A system for reading a static medical image comprising:

    computer system including a processor, a main memory, a secondary memory, a display, and an input device, a motion function stored on the computer system;
    a observation function stored on the computer system; wherein the computer system is configured to receive and store the static medical image on the secondary memory.

**18.** A system as set forth in claim 17 wherein the observation function is implemented on the processor to identify at least one pixel on the static medical image, where the at least one pixel is identified as a function of an original intensity of the at least one pixel.

**19.** A system as set forth in claim 18 where the motion function is implemented on the computer processor to add a spatial or temporal movement to the at least one pixel.

**20.** A system as set forth in claim 19 wherein the observation function and motion function are implemented to created a sequence of frames on the static medical image, where the display is configured to display the sequence of frames such that a motion is added to the static medical image, wherein the motion is used to identify pathologies and abnormalities in the static medical image.

FIG. 1

FIG. 2

FIG. 3

FIG. 4

Maximum Contrast
(180° Phase Shift)
↓

**Pixel 1**

**Pixel 2**

FIG. 5

FIG. 6

FIG. 7A

FIG. 7B

FIG. 7C

FIG. 7D

FIG. 7E

FIG. 7F

FIG. 7G

FIG. 7H

FIG. 7I

FIG. 8

FIG. 9

FIG. 10

FIG. 11

FIG. 12

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **BRIAN A. WANDELL.** Foundations of Vision. Sinauer Associates Inc, May 1995
- Sparse coding with an overcomplete basis set: A strategy employed by v1. **BRUNO A. OLSHAUSEN ; DAVID J. FIELD.** Vision Research. 1997, vol. 37, 3311-3325
- **EDWARD A. SICKLES.** Breast calcifications: Mammographic evaluation. *Radiology,* August 1986, vol. 160 (2), 289-293
- *SEER Cancer Statistics Review,* November 2004, 1975-2002
- **CHARLES E. METZ et al.** Statistical comparison of two roc-curve estimates obtained from partially paired datasets. *Medical Decision Making,* January 1998, vol. 18 (1), 110-121
- **JOHN SUCKLING et al.** The mammographic image analysis society digital mammogram database. *Exerpta Medica, number 1069 in International Congress,* 1994, 375-378
- **VIT DRGA.** The Theory of Group Operating Characteristic Analysis in Discrimination Tasks. Victoria University of Wellington, 1999
- **XIAO-HUA ZHOU ; DONNA K. MCCLISH ; NANCY A. OBUCHOWSKI.** Statistical Methods in Diagnostic Medicine, Wiley Series in Probability and Statistics. Wiley, July 2002
- **TED C. WANG ; NICOLAOS B. KARAYIANNIS.** Detection of microcalcifications in digital mammograms using wavelets. *IEEE Transactions on Medical Imaging,* August 1988, vol. 17 (4), 498-509